# EUROPÄISCHE PATENTSCHRIFT

(11) **EP 3 644 399 B1**
(45) Veröffentlichungstag und Bekanntmachung des Hinweises auf die Patenterteilung: **02.03.2022**
(21) Anmeldenummer: 19196754.6
(22) Anmeldetag: 11.09.2019
(51) Int. Cl.: H01M 10/04, H01M 50/105, B25B 5/10, H01M 10/0525

(54) **VERWENDUNG EINES SPANNSYSTEMS FÜR DIE FLEXIBLE FERTIGUNG VON LITHIUM-IONEN BATTERIEN**
USE OF A CLAMPING SYSTEM FOR THE FLEXIBLE PRODUCTION OF LITHIUM-ION BATTERIES
UTILISATION D'UN SYSTÈME DE SERRAGE POUR LA FABRICATION FLEXIBLE DE BATTERIES LITHIUM-ION

(30) Priorität: 22.10.2018 DE 102018126225
(43) Veröffentlichungstag der Anmeldung: 29.04.2020
(73) Patentinhaber: VOLKSWAGEN AKTIENGESELLSCHAFT, 38440 Wolfsburg (DE)
(72) Erfinder: Rathmann, Sven, 38108 Braunschweig (DE); Stühm, Kai, 38114 Braunschweig (DE); Tornow, Alexander, 29369 Ummern (DE)
(74) Vertreter: Kirschner, Sebastian

(56) Entgegenhaltungen:
- EP-A1- 3 121 868
- EP-A2- 1 530 247
- WO-A2-2010/037796

## Beschreibung

Die vorliegende Erfindung betrifft eine Verwendung eines Spannsystems für die flexible Fertigung von Lithium-Ionen Batterien, insbesondere von sogenannten Pouch-Zellen, welche insbesondere als Traktionsbatterien in Elektrofahrzeugen Verwendung finden, mit den Merkmalen des Oberbegriffs des Patentanspruchs 1.

Im Stand der Technik sind Lithium-Ionen-Traktionsbatterien bekannt, die Batteriezellen mit einem Stapel von positiven und negativen Elektroden sowie dazwischen angeordneten Separatoren umfassen, wobei die Elektroden jeweils Elektrodenfahnen aufweisen, welche jeweils mit mindestens einem positiven und mindestens einem negativen Ableiter verschweißt sind. Dieser Aufbau ist typischerweise von einem Isoliermaterial umgeben. Die Elektroden weisen jeweils Elektrodenfahnen auf, welche aus dem Stapel der Elektroden herausgeführt sind, und welche mit einem Ableiter, auch Kollektor genannt, verbunden, typischerweise verschweißt sind. Beispielhaft soll zu diesem Aufbau auf die deutsche Patentanmeldung DE 10 2011 109 237 A1 verwiesen werden. Der Aufbau ist dabei so ausgebildet, dass aus dem Stapel der positiven und negativen Elektroden und der dazwischen angeordneten Separatoren die Elektrodenfahnen des einen Pols und des anderen Pols getrennt voneinander aus dem Stapel herausragen.

Das Stapeln der Elektrodenfolien anstelle des Wickelns hat bei rechteckigen Zellformaten wie den PHEV-1 Zellen einige Vorteile. Es führt zu einem sehr homogenen Aufbau des Zellstapels und einer besseren Raumausnutzung des Gehäuses. Damit verbessert sich die Zellkapazität, Langlebigkeit und Sicherheit gegenüber gewickelten Lithium-Ionen-Zellen. Doch das Einzelblatt-Stapelverfahren birgt auch Nachteile: Einer davon ist die geringere Verarbeitungsmenge bei den derzeit verfügbaren Anlagen für die Massenfertigung. Er liegt um den Faktor zwei bis sechs niedriger als beim Wickelverfahren. Zusätzlich ist bei großformatigen Zellen aufgrund der Forminstabilität die notwendige Präzision beim ultraschnellen Stapeln der einzelnen Elektroden-Blätter eine enorme Herausforderung.

Spannsysteme sind in der Batteriefertigung im Zusammenhang mit flachen Batteriezellen bekannt, jedoch in einer anderen Prozessstufe. Diese Spannsysteme werden eingesetzt, um bereits fertige Pouch-Batteriezellen zu Stapeln von vielen Zellen zusammen zu fassen. So beschreibt die deutsche Offenlegungsschrift DE 10 2016 200 496 A1 ein solches Spannsystem, das einen Stapel von fertigen Batteriezellen zwischen zwei Druckplatten verspannt mithilfe von Klemmbacken, damit der Stapel während des Bandierungsvorganges gehalten wird und anschließend kann der bandierte Stapel wieder frei gegeben werden. Die Spannvorrichtung der DE 10 2016 200 496 A1 weist zudem in ihrem Randbereich Aussparungen auf, in die ein Greifer eines Roboters eingreifen kann, um den verspannten Stapel in die Bandierungsvorrichtung einzulegen und wieder zu entfernen.

Aus der WO2010/037796 A2 ist ein Energiespeichermodul mit mehreren Flachzellen bekannt, wobei die Flachzellen zu einem Zellenstapel parallel zueinander angeordnet sind. An dem Flachzellenstapel sind zwei Druckplatten vorhanden, die die beiden Stirnflächen des Flachzellenstapels begrenzen. Die beiden Druckplatten stehen über Zugfedern miteinander in Verbindung. Zur Befestigung der Zugfedern an den Druckplatten sind Befestigungswinkel vorhanden, die seitlich über den Flachzellenstapel hinausragen und jeweils einen Abschnitt aufweisen, der sich in einer Richtung senkrecht zu dem durch die Flachzellenstapel erstreckt. Das Spannsystem dient nicht zur Fixierung eines Stapels von Elektrodenfolien für die nachfolgende Batteriezellenfertigung, sondern zur Fixierung der Flachzellen, nachdem die Batteriezellenfertigung abgeschlossen ist.

Aus der EP 3 121 868 A1 ist ein Spannsystem mit einem Gehäuse bekannt. Hierbei ist eine Grundplatte mit zwei feststehenden stirnseitigen Platten vorhanden. Relativ zu der Platte ist eine bewegliche Platte in Form einer Druckplatte vorhanden, die mittels einer Gewindestange relativ zu der feststehenden Platte verschiebbar ist und so der Stapel mit den Batteriezellen und den dazwischen angeordneten Abstandselementen komprimierbar ist. Die Abstandselemente sind aufblasbar, wobei ein Druckluftanschluss die aufblasbaren Abstandselemente mit Druckluft versorgt.

Aus der EP 1 530 247 A2 ist eine Batterie mit mehreren gestapelt angeordneten Zellen bekannt, wobei ein Spannsystem zwei Halteplatten als Druckplatten aufweist, zwischen denen einzelnen Zellen und dazwischen liegende Wärmetransferplatten angeordnet sind. Die Druckplatten verbindende Spannschrauben sind dabei außerhalb des Aufnahmebereiches angeordnet.

Alle bisher bekannten Spannsysteme für die Bandierung von fertigen Batteriezellen zu Stapeln lassen sich jedoch nicht einfach in die vorgelagerte Fertigungsstufe der Herstellung der einzelnen Batteriezellen durch das Stapeln der Elektrodenfolien einsetzen. Insbesondere die Anforderungen an die Anbindung der verschiedenen Fertigungsstationen und die Empfindlichkeit der zu haltenden Objekte sind stark unterschiedlich. Beispielsweise wäre die im Stand der Technik vorgeschlagene Art der Verspannung durch Klemmbacken, welche unterhalb des Stapelträgers mit einer Feder oder einem anderen Spannelement verbunden sind, in der massenhaften Fertigung der Einzelzellen aus Elektrodenstapeln ungeeignet.

Die Fixierung des Batteriezellenstapels mittels eines Greifsystems ist zwar eine flexible Lösung. Sie hat aber zum Nachteil, dass die nachfolgenden Arbeitsschritte in unmittelbarer Nähe zum greifenden Handhabungssystem positioniert werden müssen. Dies ist nachteilig für eine taktzeitoptimierte Fertigung der Batteriezelle, da das Handhabungssystem für alle bei allen nachfolgenden Fertigungsschritten blockiert ist.

Aufgabe der vorliegenden Erfindung ist es daher, eine verbesserte Durchsatzgeschwindigkeit und verlässliche Präzision bei der Massenproduktion von gattungsgemäßen Batterie-Einzelzellen durch ein neues Spannsystem für das Zusammenhalten und Weiterverarbeiten der Elektrodenstapel zur Verfügung zu stellen.

Diese Aufgabe wird erfindungsgemäß gelöst durch ein Spannsystem mit den Merkmalen des Patentanspruchs 1 und des Patentanspruchs 6.

Die Erfindung umfasst ein Spannsystem zur Fixierung eines Stapels von Elektrodenfolien für die nachfolgende Batteriezellenfertigung und umfasst eine Grundplatte, eine Druckplatte, mindestens zwei Spannelemente und einen Aufnahmebereich zur Aufnahme des Stapels zwischen Grundplatte und Druckplatte, wobei die Spannelemente die Grundplatte und die Druckplatte gegeneinander derart verspannen, dass die Elektrodenfolien im Aufnahmebereich fixierbar sind.

Erfindungsgemäß sind die Spannelemente in den Randbereichen der jeweiligen langen Seiten der Platten außerhalb des Aufnahmebereichs angeordnet.

Vorteilhaferweise können mit dem erfindungsgemäßen Spannsystem alle Schritte erstmalig mit einem einzigen Haltesystem automatisierbar durchlaufen werden. Beginnend bei der Bildung des Elektrodenfolienstapels wird ein genaues Halten der Position des Stapels für die nachfolgenden Bearbeitungsschritte garantiert. Das Spannsystem der vorliegenden Erfindung weist eine einfache Aufbauweise und schnelle Einsetzbarkeit insbesondere im Hinblick auf die Massenfertigung von Pouch-Einzelbatterien auf.

In Anpassung an die im Allgemeinen rechteckige Form der Elektrodenfolien sind sowohl Grundplatte als auch Druckplatte des erfindungsgemäßen Spannsystems im Wesentlichen rechteckig ausgeformt. Mithin weisen beiden Platten je zwei kurze und zwei lange Seiten auf. Die Platten sind derart dimensioniert, dass sie mit den langen Seiten die Elektrodenfolien in Abschnitten überragen. In den Randbereichen der langen Seiten sind in den Platten zueinander korrespondierend Aufnahmen für die Spannelemente vorgesehen. Dies können beispielsweise Durchgangslöcher, Passbohrungen oder Vorsprünge sein, je nach Ausgestaltung der Spannelemente. In dem erfindungsgemäßen Spannsystem ist vorgesehen, dass zunächst die Grundplatte bereitgestellt wird, auf deren Aufnahmebereich die Elektrodenfolien in entsprechender Orientierung automatisiert gestapelt werden können. Auf den Elektrodenfolienstapel wird dann die Druckplatte derart aufgelegt, dass sich der Stapel im Aufnahmebereich befindet und die im Randbereich der langen Seiten angeordneten Aufnahmen für die Spannelemente zu denen der Grundplatte ausgerichtet sind. Die Spannelemente können dann mit der vorgesehenen Kraft eingesetzt und gespannt werden. Das so beladene Spannsystem durchläuft dann die verschiedenen nachfolgenden Fertigungsschritte, bis schließlich die Versiegelungsfolien aufgelegt und verschweißt werden. Die Fertigungsschritte umfassen ein Verschweißen von Ableiterfahnen, ein Hochpotential-Testen, ein Bandieren, ein Trocknen und/oder ein Versiegeln der Einzelzelle in eine Versiegelungsfolie.

In einer Ausgestaltung der Erfindung sind die Spannelemente derart ausgestaltet, dass der Elektrodenfolienstapel in verschiedenen Höhen fixierbar ist. Dies kann beispielsweise durch Spannelemente erreicht werden, die eine Verschraubung mit unterschiedlichem, definiertem Drehmoment beziehungsweise mit unterschiedlicher zwei- oder mehrstufig wegbeschränkter Aufbringung umfassen. Alternativ ist ein Spannelement einsetzbar, das Klemmbügel, Kniehebel oder Klemmhebel in verschiedenen Höhen oder ein mehrstufiges Bajonett-System vorsieht.

Auf diese Weise kann sichergestellt werden, dass das Spannsystem in allen Fertigungsvorrichtungen einsetzbar ist und eine volle Funktionsintegration in die automatisierte Fertigung sichergestellt ist. Stapel von Elektrodenfolien können auch in unterschiedlichen Dicken weiterverarbeitet werden.

In einer Ausführungsform der Erfindung können die Spannelemente bevorzugt Schrauben, Bolzen, Klemmen, Bajonett-Elemente oder elastische Spangen umfassen. Die Befestigungsmittel können im Hinblick auf die Anforderungen und bereits vorhandenen Mittel in der automatisierten Fertigung angepasst werden, so dass eine einfache Integration in bestehende Systeme gegeben ist.

In einer weiteren Ausgestaltung es erfindungsgemäßen Spannsystems sind die Spannelemente, wie beispielsweise Schrauben oder Bolzen, in Führungshülsen angeordnet. Die Fehleranfälligkeit beim Einbringen und Abnehmen des Spannsystems kann minimiert werden, insbesondere im Hinblick auf die Empfindlichkeit der zu handhabenden Elektrodenfolien.

In einer weiteren bevorzugten Ausführungsform der Erfindung können die Spannelemente jeweils eine Spannfeder zwischen Grundplatte und Druckplatte angeordnet umfassen. Die Spannfeder kann beispielsweise als Spiralfeder oder als Tellerfeder ausgestaltet sein. Sie kann dazu dienen, einen bevorzugten Abstand und mithin eine bevorzugten Stapeldicke beziehungsweise einen definierten Anpressdruck im Aufnahmebereich zwischen den beiden Platten zu definieren. Auf diese Weise kann eine Beschädigung der empfindlichen Elektrodenfolien im Stapel vermieden werden.

Die Erfindung umfasst weiterhin ein Spannsystem zur Fixierung eines Stapels von Elektrodenfolien für die nachfolgende Batteriezellenfertigung und umfasst eine Grundplatte, eine Druckplatte, mindestens zwei Spannelemente und einen Aufnahmebereich zur Aufnahme des Stapels zwischen Grundplatte und Druckplatte, wobei die Spannelemente die Grundplatte und die Druckplatte gegeneinander derart verspannen, dass die Elektrodenfolien im Aufnahmebereich fixierbar sind.

Erfindungsgemäß weisen die Grundplatte und die Druckplatte jeweils mehrere, jedoch mindestens zwei, Anbindungspunkte für die Anbindung des Spannsystems an Vorrichtungen der nachfolgenden Batteriezellenfertigung derart auf, dass die Anbindungspunkte einer jeweiligen Platte in ihrer Form oder Größe ungleich ausgestaltet sind.

Die Anbindungspunkte für die Anbindung des Spannsystems an Vorrichtungen der nachfolgenden Batteriezellenfertigung sind erfindungsgemäß auf der Grundplatte und auf der Druckplatte jeweils unterschiedlich ausgestaltet, um so eine fehlerhafte Handhabung bei der Anbindung an die verschiedenen Fertigungsvorrichtungen sicher zu vermeiden. Eine solche fehlervermeidende Differenzierung wird auch "Poka Yoke" genannt. Beispielsweise können die Anbindungspunkte der vorliegenden Erfindung als unterschiedlich geformte oder unterschiedlich große Durchgangslöcher ausgestaltet sein. Die Grundplatte und/oder die Druckplatte sind bezüglich ihrer Längsmittelebene spiegelsymmetrisch ausgebildet. Hierdurch können die Grundplatte und/oder die Druckplatte um ihre Längsachse um 180 gedreht verwendet werden. Die Längsmittelebene bildet somit eine Symmetrieebene. Vorzugsweise liegen die Anbindungspunkte in der Symmetrieebene. Es gibt jedoch auch eine Vielzahl an weiteren Möglichkeiten, die erfindungsgemäße Differenzierung der Anbindungspunkte zu erzielen. Ein Beispiel hierfür sind unterschiedlich geformte Vorsprünge oder Bolzen. Mittels der Anbindungspunkte ist der Stapel in einer Fertigungsvorrichtung exakt positionierbar.

Vorteilhafterweise kann mit dem erfindungsgemäßen Spannsystem somit über die integrierten Aussparungen und insbesondere über die Anbindungspunkte, die wie Justagevorrichungen wirken, ein exaktes Hinzufügen und/oder Bearbeiten ohne wiederholtes Bestimmen der Lage des Stapels erfolgen.

In einer Ausgestaltung des erfindungsgemäßen Spannsystems sind die Spannelemente in den Randbereichen der jeweiligen langen Seiten der Platten außerhalb des Aufnahmebereichs angeordnet.

Gerade für eine Großserienproduktion ist diese Gestaltung der Erfindung von großem Vorteil, weil gerade in der Kombination der Anordnung der Spannelemente und der unterschiedlichen Anbindungspunkte eine Automatisierung der Fertigungsvorgänge mit einem einzigen Spannsystem für die Elektrodenfolienstapel auch fehlersicher erreicht werden kann.

In einer Ausgestaltung des erfindungsgemäßen Spannsystems sind die Spannelemente derart ausgestaltet, dass der Elektrodenfolienstapel in verschiedenen Höhen fixierbar ist. Dies dient in vorteilhafter Weise der Flexibilität des Spannsystems auch in unterschiedlichen Fertigungsanlagen und in Bezug auf unterschiedlichen Dicken der zu fertigenden Batteriezellen.

In einer Ausgestaltung des erfindungsgemäßen Spannsystems weisen die Grundplatte und die Druckplatte Aussparungen zum Fixieren des Stapels auf. Die Aussparungen dienen zum Anbringen von Stapelfixierungen bspw. von Tapes. Die Aussparungen dienen als Zugangspunkte zum Tapen des Stapels. Die Aussparungen erstrecken sich dazu bis in den Bereich der Elektrodenfolie.

Im Allgemeinen werden die Stapel von Elektrodenfolien zunächst in ein erfindungsgemäßes Spannsystem eingelegt und fixiert. Nach einer möglichen Hochpotential-Prüfung wird der Stapel mit Folienbahnen vorfixiert, bevor eine Trocknung und nachfolgende Schritte sich anschließen. Diese Vorfixierung nennt man auch Bandieren. In der vorstehend genannten Ausgestaltung erlaubt das Spannsystem aufgrund von Aussparungen im Randbereich der Grundplatte und der Druckplatte dieses Bandieren in einfacher Weise, ohne dass das Spannsystem gelöst werden müsste. Außerdem könnten die Aussparungen im Randbereich vorteilhaft dazu genutzt werden, als Justage für das exakte Einlegen des Spannsystems in die Fertigungsvorrichtungen zu dienen und eine Referenz für die Positionierung zu bieten. Nicht zuletzt sind die Aussparungen im Randbereich auch dazu nützlich, um eine Anbindung für ein Erfassen oder Greifen des Spannsystems, beispielsweise zum Transport an eine nächste Fertigungsstation zu erleichtern.

Die Erfindung betrifft die Verwendung eines erfindungsgemäßen Spannsystems wie vorstehend beschrieben in den ausgeführten Ausgestaltungen in der Fertigung von Batteriezellen, nämlich von Traktionsbatterien von Fahrzeugen.

Die Spannvorrichtung ist daher flexibel einsatzbar und kann für die manuelle, teil- und vollautomatisierte Herstellung von Li-Ionen-Pouchzellen verwendet werden.

Es gibt eine Vielzahl von Möglichkeiten, das Spannsystem auszugestalten und weiterzubilden. Hierfür darf zunächst auf die dem Patentanspruch 1 und dem Patentanspruch 6 nachgeordneten Patentansprüche verwiesen werden. Im Folgenden darf eine bevorzugte Ausgestaltung der Erfindung anhand der Zeichnungen und den dazugehörigen Beschreibungen näher erläutert werden. In den Zeichnungen zeigt:
**Fig. 1** in einer stark schematisierten Darstellung eine Draufsicht auf eine Grundplatte des erfindungsgemäßen Spannsystems,
**Fig. 2** in einer stark schematisierten Darstellung eine Draufsicht auf eine Druckplatte des erfindungsgemäßen Spannsystems,
**Fig. 3** in einer stark schematisierten Darstellung als Schnittansicht einen Detailausschnitt einer Platte mit Spannelementen und Anbindungspunkten, und
**Fig. 4** in einer stark schematisierten Darstellung als Schnittansicht einen vergrößerten Detailausschnitt eines in den Platten angeordneten Spannelements.

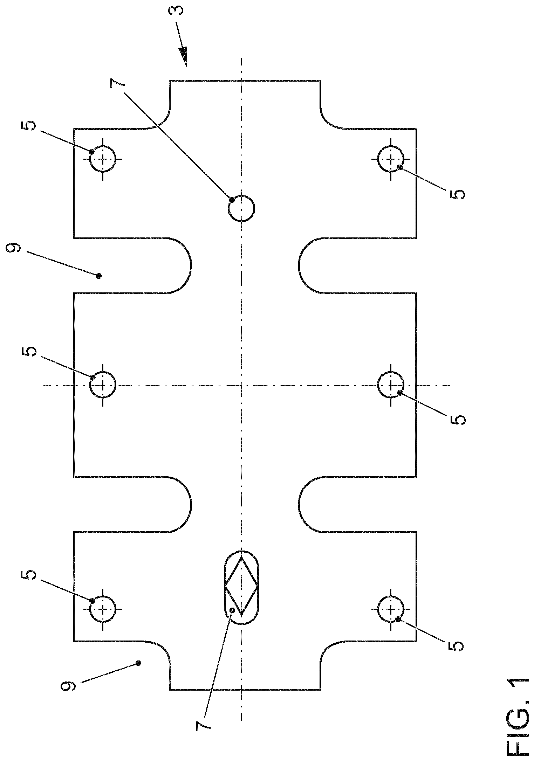

In Figur 1 ist in einer stark schematisierten Draufsicht eine Grundplatte 3 eines erfindungsgemäßen Spannsystems 1 gezeigt. Die Grundplatte 3 weist eine im Wesentlichen rechteckige Grundform mit jeweils kurzen und langen Seiten auf. In den Randbereichen der langen Seiten sind Passbohrungen als Teile der Spannelemente 5 angeordnet. Zudem sind in den Randbereichen Aussparungen 9 vorgesehen. Die Aussparungen 9 sind als U-förmige Ausschnitte ausgeformt. Alternativ kann die Aussparungen auch eine andere Formhaben, bspw. kreisförmig, polygonal, rechteckig oder dgl. Die Aussparungen erstrecken sich zum Tapen des Stapels 2 dazu bis in den Bereich der Elektrodenfolie. Insbesondere die Aussparungen 9 in den Randbereichen der kurzen Seiten können als Referenz und Angriffspunkte für die Positionierung des Spannsystems in die vorgesehenen Fertigungsvorrichtungen dienen. Mittig im Grundkörper der Grundplatte 3 sind zwei Anbindungspunkte 7 gezeigt, von denen einer als Langloch und der andere als Rundloch ausgeformt ist. Sie dienen als Aufnahmen für beispielsweise bolzenartige Aufnahmen in den Fertigungsvorrichtungen. Aufgrund ihrer unterschiedlichen Ausformung und Größe stellen die Anbindungspunkte 7 sicher, dass eine seitenrichtige Orientierung beim Einlegen des erfindungsgemäßen Spannsystems 1 in eine Fertigungsvorrichtung eingehalten wird, beispielsweise in eine Bandierungsvorrichtung, in eine Hochpotentialtestvorrichtung oder in eine Trocknungsvorrichtung. So kann gerade bei automatisierten Vorgängen so vermieden werden, dass zum Beispiel die Anoden- mit der Kathodenseite vertauscht wird. Ferner stellen die Anbindungspunkte 7 die exakte Positionierung des Stapels 2 in der Fertigungsvorrichtung sicher.

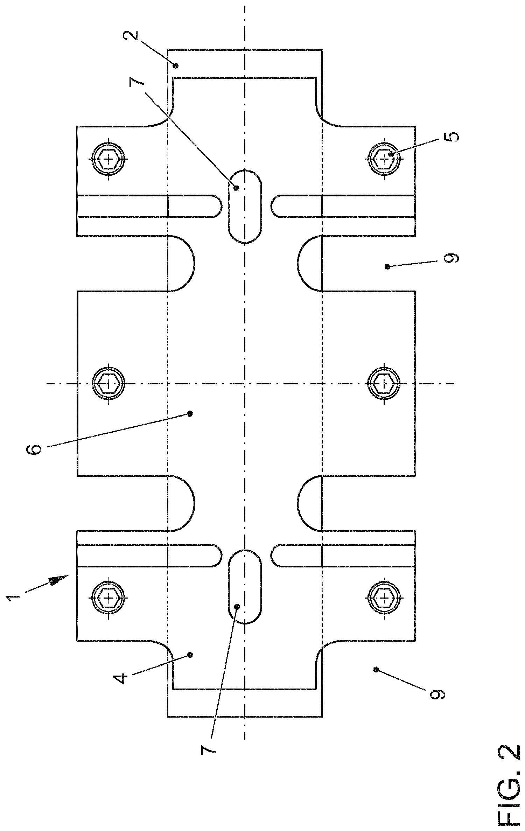

In Figur 2 ist in einer stark schematisierten Draufsicht eine Druckplatte 4 eines erfindungsgemäßen Spannsystems 1 gezeigt. Die dargestellte Druckplatte 4 korrespondiert zu der in Figur 1 gezeigten Grundplatte 3 und kann zusammen mit der Grundplatte 3 der vorherigen Figur in einem Spannsystem 1 der Erfindung eingesetzt werden. Die Druckplatte 4 weist eine im Wesentlichen rechteckige Grundform mit jeweils kurzen und langen Seiten auf. Es sind auch andere bspw. polygonale Grundformen denkbar. Unterhalb der Druckplatte 4 ist ein Stapel von Elektrodenfolien 2 angeordnet, dessen kurze Enden über die Ränder der kurzen Seiten der Druckplatte 4 hinausragen. In der vorliegenden Figur ist zu sehen, dass die Einrichtungen der Spannelemente 5 außerhalb des Aufnahmebereichs 6 der Druckplatte 4 und auch außerhalb des Aufnahmebereichs der korrespondierenden Grundplatte 3 liegen. In den Randbereichen der langen Seiten sind wie in der Grundplatte 3 Passbohrungen als Teile der Spannelemente 5 angeordnet. Zudem sind in den Randbereichen ebenfalls Aussparungen 9 vorgesehen. Die Aussparungen 9 sind korrespondierend zu denen der Grundplatte als U-förmige Ausschnitte ausgeformt. Die Aussparungen 9 dienen zum Anbringen von Stapelfixierungen bspw. von Tapes. Die Aussparungen 9 dienen als Zugangspunkte zum Tapen des Stapels 2. Mittig im Grundkörper der Druckplatte 4 sind zwei Anbindungspunkte 7 gezeigt, von denen einer als Langloch und der andere als Rundloch ausgeformt ist. Sie dienen als Aufnahmen für beispielsweise bolzenartige Aufnahmen in den Fertigungsvorrichtungen. Aufgrund ihrer unterschiedlichen Ausformung und Größe stellen die Anbindungspunkte 7 sicher, dass eine seitenrichtige Orientierung beim Einlegen des erfindungsgemäßen Spannsystems 1 in eine Fertigungsvorrichtung eingehalten wird, beispielsweise in eine Bandierungsvorrichtung, in eine Hochpotentialtestvorrichtung oder in eine Trocknungsvorrichtung. So kann gerade bei automatisierten Vorgängen so vermieden werden, dass zum Beispiel die Anoden- mit der Kathodenseite vertauscht wird. Ferner stellen die Anbindungspunkte 7 die exakte Positionierung des Stapels 2 in der Fertigungsvorrichtung sicher.

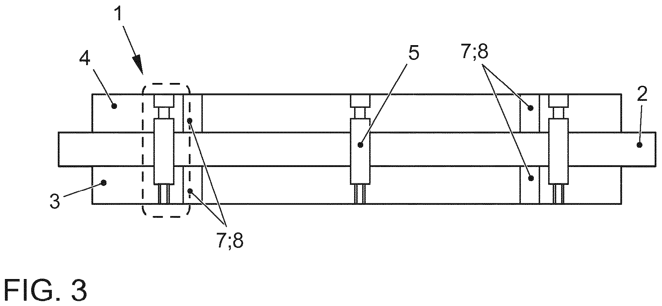

In Figur 3 ist in einer stark schematisierten Darstellung als Schnittansicht ein Detailausschnitt der Platten 3 und 4 mit Spannelementen 5 und Anbindungspunkten 7 gezeigt. Zwischen der Grundplatte 3 und der Druckplatte 4 ist ein Stapel von Elektrodenfolien 2 eingelegt. In den Randbereichen der langen Seiten der Platten 3 und 4 außerhalb des Aufnahmebereichs für den Elektrodenstapel sind Spannelemente 5 vorgesehen. Die gezeigten Spannelemente 5 umfassen Durchgangslöcher als Passbohrungen in den Platten 3 und 4. Durch diese Durchgangslöcher sind Schrauben eingesetzt, die die Druckplatte 4 mit der Grundplatte 5 verspannen und auf diese Weise den Stapel 2 dazwischen im Aufnahmebereich fixieren. Weiterhin weisen die Grundplatte 3 und die Druckplatte 4 jeweils übereinander angeordnete, in ihrer Ausformung und/oder Größe unterschiedliche Anbindungspunkte 7 auf, welche hier ebenfalls als Durchgangslöcher dargestellt sind. In die Durchgangslöcher der Anbindungspunkte 7 sind Führungshülsen 8 eingelassen, die als Zentrierungshilfe bei der Aufnahme von entsprechend ausgeformten Bolzen einer Fertigungsvorrichtung (nicht gezeigt) dienen.

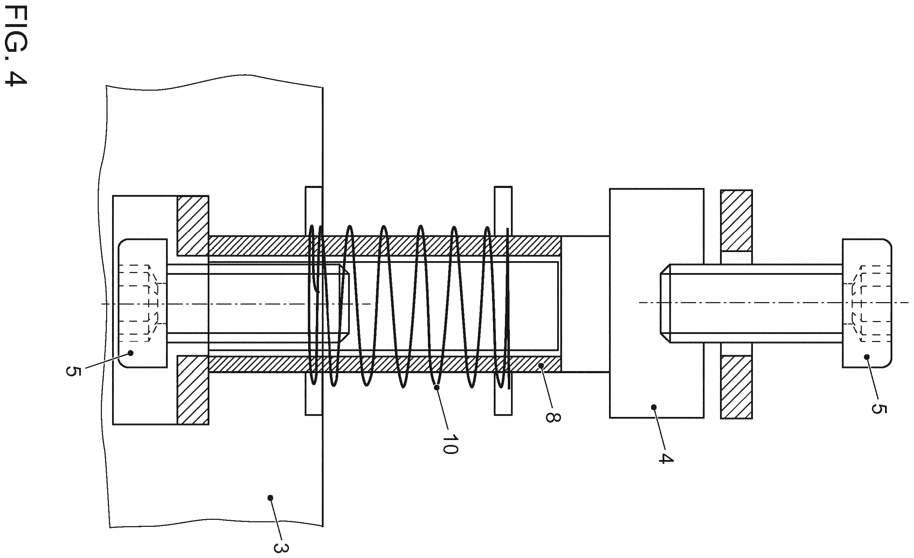

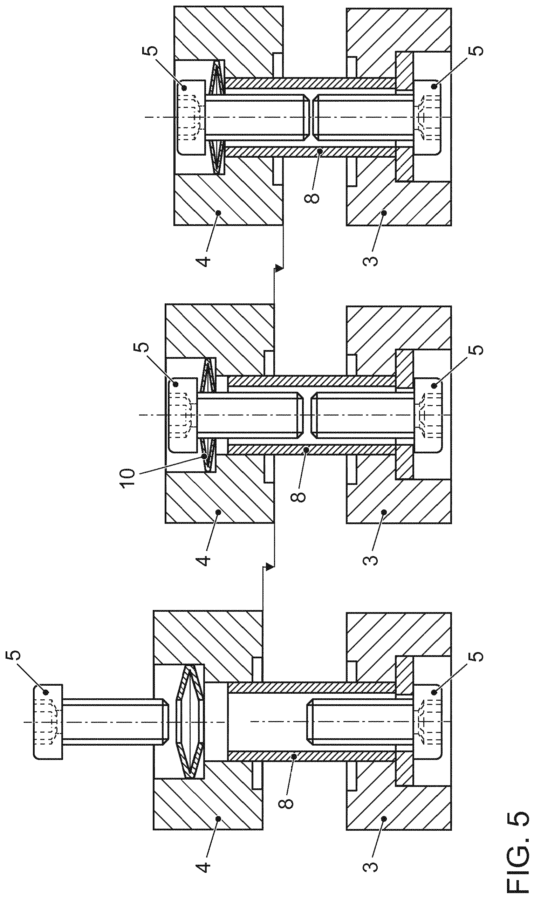

In Figur 4 ist in einer stark schematisierten Darstellung als Schnittansicht ein vergrößerter Detailausschnitt des erfindungsgemäßen Spannsystems 1 in einer weiteren Ausgestaltung gezeigt. Die Grundplatte 3 und die Druckplatte 4 sind mit einander gegenüber liegenden Durchgangslöchern versehen. In die Durchgangslöcher greifen jeweils Schrauben als Teile des Spannelements 5 ein. Sie werden in Führungshülsen 8 geführt. Auf diese Weise kann ein geführtes automatisiertes Einsetzen der Schrauben erfolgen. Die Führungshülsen 8 können zudem dazu dienen, den zwischen den beiden Platten 3 und 4 zu fixierenden Stapel von empfindlichen Elektrodenfolien zu schützen. Im Zwischenbereich zwischen den beiden Platten 3 und 4 und um die Führungshülsen 8 herum ist außerdem eine Spannfeder 10 angeordnet. Die Spannfeder 10 kann als Spiralfeder oder als Tellerfeder ausgebildet sein. Die Spannfeder 10 wird in nutartigen Erweiterungen der Durchgangslöcher in den im Einbauzustand inneren Bereichen der Platten 3 und 4 gehalten und aufgenommen. Sie kann dazu dienen, eine zu große Krafteinwirkung auf die dazwischen anzuordnenden Elektrodenfolien zu vermeiden und einen vordefinierten Abstand zwischen den Platten 3 und 4 einzuhalten. Hierdurch wird die Prozesssicherheit nochmals verbessert.

### Bezugszeichenliste

- 1: Spannsystem
- 2: Stapel von Elektrodenfolien
- 3: Grundplatte
- 4: Druckplatte
- 5: Spannelement
- 6: Aufnahmebereich
- 7: Anbindungspunkte
- 8: Führungshülse
- 9: Aussparungen
- 10: Spannfeder

## Patentansprüche

1. Verwendung eines Spannsystem (1) zur Fixierung eines Stapels (2) von Elektrodenfolien für die nachfolgende Batteriezellenfertigung einer Traktionsbatterie von Fahrzeugen, wobei das Spannsystem eine Grundplatte (3), eine Druckplatte (4), mindestens zwei Spannelemente (5) und einen Aufnahmebereich (6) zur Aufnahme des Stapels (2) zwischen Grundplatte (3) und Druckplatte (4) aufweist, wobei die Spannelemente (5) die Grundplatte (3) und die Druckplatte (4) gegeneinander derart verspannen, dass die Elektrodenfolien im Aufnahmebereich (6) fixierbar sind, wobei die Spannelemente (5) in den Randbereichen der jeweiligen langen Seiten der Platten (3, 4) außerhalb des Aufnahmebereichs (6) angeordnet sind, **dadurch gekennzeichnet, dass** das so beladene Spannsystem (1) verschiedene nachfolgende Fertigungsschritte durchläuft, bis schließlich Versiegelungsfolien aufgelegt und verschweißt werden, wobei die Fertigungsschritte ein Verschweißen von Ableiterfahnen, ein Hochpotential-Testen, ein Bandieren, ein Trocknen und/oder ein Versiegeln der Einzelzelle in eine Versiegelungsfolie umfassen.

2. Verwendung eines Spannsystems gemäß Anspruch 1, **dadurch gekennzeichnet, dass** die Spannelemente (5) derart ausgestaltet sind, dass der Elektrodenfolienstapel (2) in verschiedenen Höhen fixierbar ist, wobei Spannelemente (5) verwendet werden, die eine Verschraubung mit unterschiedlichem, definiertem Drehmoment beziehungsweise mit unterschiedlicher zwei- oder mehrstufig wegbeschränkter Aufbringung umfassen, oder alternativ ein Spannelement (5) eingesetzt wird, das Klemmbügel, Kniehebel oder Klemmhebel in verschiedenen Höhen oder ein mehrstufiges Bajonett-System vorsieht.

3. Verwendung eines Spannsystems gemäß Anspruch 1 oder 2, **dadurch gekennzeichnet, dass** die Spannelemente (5) Schrauben, Bolzen, Klemmen, Bajonett-Elemente oder elastische Spangen sind.

4. Verwendung eines Spannsystems gemäß einem der vorstehenden Ansprüche, **dadurch gekennzeichnet, dass** die Spannelemente (5) in Führungshülsen (8) angeordnet sind.

5. Verwendung eines Spannsystems gemäß einem der vorstehenden Ansprüche, **dadurch gekennzeichnet, dass** die Spannelemente (5) jeweils eine Spannfeder (10) zwischen Grundplatte (3) und Druckplatte (4) angeordnet umfassen.

6. Verwendung eines Spannsystem (1) zur Fixierung eines Stapels (2) von Elektrodenfolien für die nachfolgende Batteriezellenfertigung einer Traktionsbatterie von Fahrzeugen, wobei das Spannsystem eine Grundplatte (3), eine Druckplatte (4), mindestens zwei Spannelemente (5) und einen Aufnahmebereich (6) zur Aufnahme des Stapels (2) zwischen Grundplatte (3) und Druckplatte (4) aufweist, wobei die Spannelemente (5) die Grundplatte (3) und die Druckplatte (4) gegeneinander derart verspannen, dass die Elektrodenfolien im Aufnahmebereich (6) fixierbar sind,**dadurch gekennzeichnet, dass** die Grundplatte (3) und die Druckplatte (4) jeweils mehrere, jedoch mindestens zwei, Anbindungspunkte (7) für die Anbindung des Spannsystems (1) an Vorrichtungen der nachfolgenden Batteriezellenfertigung derart aufweisen, dass die Anbindungspunkte (7) einer jeweiligen Platte (3, 4) in ihrer Form oder Größe ungleich ausgestaltet sind, wobei das so beladene Spannsystem die verschiedene nachfolgende Fertigungsschritte durchläuft, bis schließlich Versiegelungsfolien aufgelegt und verschweißt werden, wobei die Fertigungsschritte ein Verschweißen von Ableiterfahnen, ein Hochpotential-Testen, ein Bandieren, ein Trocknen und/oder ein Versiegeln der Einzelzelle in eine Versiegelungsfolie umfassen.

7. Verwendung eines Spannsystems gemäß Anspruch 6, **dadurch gekennzeichnet, dass** die Spannelemente (5) in den Randbereichen der jeweiligen langen Seiten der Platten (3, 4) außerhalb des Aufnahmebereichs (6) angeordnet sind.

8. Verwendung eines Spannsystems gemäß Anspruch 7, **dadurch gekennzeichnet, dass** die Spannelemente (5) derart ausgestaltet sind, dass der Elektrodenfolienstapel (2) in verschiedenen Höhen fixierbar ist, wobei Spannelemente (5) verwendet werden, die eine Verschraubung mit unterschiedlichem, definiertem Drehmoment beziehungsweise mit unterschiedlicher zwei- oder mehrstufig wegbeschränkter Aufbringung umfassen, oder alternativ ein Spannelement (5) eingesetzt wird, das Klemmbügel, Kniehebel oder Klemmhebel in verschiedenen Höhen oder ein mehrstufiges Bajonett-System vorsieht.

9. Verwendung eines Spannsystems gemäß einem der vorstehenden Ansprüche 6 bis 8, **dadurch gekennzeichnet, dass** die Anbindungspunkte (7) als Passbohrung insbesondere mit Zentrierhülsen ausgestaltet sind.

10. Verwendung eines Spannsystems gemäß einem der vorstehenden Ansprüche, **dadurch gekennzeichnet, dass** die Grundplatte (3) und die Druckplatte (4) Aussparungen (9) zum Tapen des Stapels (2) aufweisen.

11. Verwendung eines Spannsystems gemäß einem der vorstehenden Ansprüche, **dadurch gekennzeichnet, dass** mittels der Anbindungspunkte (7) der Stapel (2) in einer Fertigungsvorrichtung positionierbar ist.

## Claims

1. Use of a clamping system (1) for fixing a stack (2) of electrode foils for subsequent battery cell manufacture for a traction battery for vehicles, wherein the clamping system has a base plate (3), a pressure plate (4), at least two clamping elements (5) and a receiving region (6) for receiving the stack (2) between the base plate (3) and the pressure plate (4), wherein the clamping elements (5) clamp the base plate (3) and the pressure plate (4) against one another in such a way that the electrode foils can be fixed in the receiving region (6), wherein the clamping elements (5) are arranged in the edge regions of the respective long sides of the plates (3, 4) outside the receiving region (6), **characterized in that** the clamping system (1) loaded in this way runs through various subsequent manufacturing steps until finally sealing foils are laid and welded, wherein the manufacturing steps comprise welding arrester lugs, high-potential testing, taping, drying and/or sealing the individual cell into a sealing foil.

2. Use of a clamping system according to Claim 1, **characterized in that** the clamping elements (5) are configured in such a way that the electrode foil stack (2) can be fixed at various heights, wherein clamping elements (5) are used which involve screw-connection with a different, defined torque or with different application with limited travel in two or multiple stages, or alternatively a clamping element (5) is used which provides a clamping clip, toggle lever or clamping lever at various heights or a multistage bayonet system.

3. Use of a clamping system according to Claim 1 or 2, **characterized in that** the clamping elements (5) are screws, bolts, clamps, bayonet elements or elastic clasps.

4. Use of a clamping system according to one of the preceding claims, **characterized in that** the clamping elements (5) are arranged in guide sleeves (8).

5. Use of a clamping system according to one of the preceding claims, **characterized in that** the clamping elements (5) each comprise a clamping spring (10) arranged between the base plate (3) and the pressure plate (4).

6. Use of a clamping system (1) for fixing a stack (2) of electrode foils for subsequent battery cell manufacture for a traction battery for vehicles, wherein the clamping system has a base plate (3), a pressure plate (4), at least two clamping elements (5) and a receiving region (6) for receiving the stack (2) between the base plate (3) and the pressure plate (4), wherein the clamping elements (5) clamp the base plate (3) and the pressure plate (4) against one another in such a way that the electrode foils can be fixed in the receiving region (6), **characterized in that** the base plate (3) and the pressure plate (4) each have a plurality of, but at least two, connecting points (7) for connecting the clamping system (1) to devices for subsequent battery cell manufacture in such a way that the connecting points (7) of a respective plate (3, 4) are configured differently in respect of their shape or size, wherein the clamping system loaded in this way runs through various subsequent manufacturing steps until finally sealing foils are laid and welded, wherein the manufacturing steps comprise welding arrester lugs, high-potential testing, taping, drying and/or sealing the individual cell into a sealing foil.

7. Use of a clamping system according to Claim 6, **characterized in that** the clamping elements (5) are arranged in the edge regions of the respective long sides of the plates (3, 4) outside the receiving region (6).

8. Use of a clamping system according to Claim 7, **characterized in that** the clamping elements (5) are configured in such a way that the electrode foil stack (2) can be fixed at various heights, wherein clamping elements (5) are used which involve screw-connection with a different, defined torque or with different application with limited travel in two or multiple stages, or alternatively a clamping element (5) is used which provides a clamping clip, toggle lever or clamping lever at various heights or a multistage bayonet system.

9. Use of a clamping system according to one of preceding Claims 6 to 8, **characterized in that** the connecting points (7) are configured as fitting bores, in particular with centring sleeves.

10. Use of a clamping system according to one of the preceding claims, **characterized in that** the base plate (3) and the pressure plate (4) have cutouts (9) for taping the stack (2).

11. Use of a clamping system according to one of the preceding claims, **characterized in that** the stack (2) can be positioned in a manufacturing device by means of the connecting points (7).

## Revendications

1. Utilisation d'un système de contrainte (1) pour fixer un empilement (2) de feuilles d'électrodes destiné à la fabrication ultérieure d'éléments d'une batterie de traction dans des véhicules, le système de contrainte comportant une plaque de base (3), une plaque de pression (4), au moins deux éléments de contrainte (5) et une zone de réception (6) destinée à recevoir l'empilement (2) entre la plaque de base (3) et la plaque de pression (4), les éléments de contrainte (5) serrant la plaque de base (3) et la plaque de pression (4) l'une contre l'autre de manière que les feuilles d'électrodes puissent être fixées dans la zone de réception (6), les éléments de contrainte (5) étant disposés dans les zones de bord des grands côtés respectifs des plaques (3, 4) à l'extérieur de la zone de réception (6), **caractérisée en ce que** le système de contrainte (1) ainsi chargé passe par diverses étapes de fabrication ultérieures jusqu'à ce que des feuilles de scellement soient finalement appliquées et soudées, les étapes de fabrication comprenant le soudage de talons déflecteurs, le test à haut potentiel, le cerclage, le séchage et/ou le scellement de l'élément individuel dans une feuille de scellement.

2. Utilisation d'un système de contrainte selon la revendication 1, **caractérisée en ce que** les éléments de contrainte (5) sont conçus de telle sorte que l'empilement de feuilles d'électrodes (2) puisse être fixé à différentes hauteurs, des éléments de contrainte (5) étant utilisés qui comprennent un moyen de vissage avec un couple défini différent ou avec une application différente à course restreinte à deux ou plusieurs étages, ou en variante un élément de contrainte (5) étant utilisé qui prévoit un étrier de serrage, un levier à genouillère ou un levier de serrage à différentes hauteurs ou un système à baïonnette à plusieurs étages.

3. Utilisation d'un système de contrainte selon la revendication 1 ou 2, **caractérisée en ce que** les éléments de contrainte (5) sont des vis, des boulons, des pinces, des éléments à baïonnette ou des agrafes élastiques.

4. Utilisation d'un système de contrainte selon l'une des revendications précédentes, **caractérisée en ce que** les éléments de contrainte (5) sont disposés dans des douilles de guidage (8).

5. Utilisation d'un système de contrainte selon l'une des revendications précédentes, **caractérisée en ce que** les éléments de contrainte (5) comprennent chacun un ressort de contrainte (10) disposé entre la plaque de base (3) et la plaque de pression (4).

6. Utilisation d'un système de contrainte (1) pour fixer un empilement (2) de feuilles d'électrodes destiné à la fabrication ultérieure d'éléments d'une batterie de traction de véhicules, le système de contrainte comportant une plaque de base (3), une plaque de pression (4), au moins deux éléments de contrainte (5) et une zone de réception (6) destinée à recevoir l'empilement (2) entre la plaque de base (3) et la plaque de pression (4), les éléments de contrainte (5) serrant la plaque de base (3) et la plaque de pression (4) l'une contre l'autre de manière que les feuilles d'électrodes puissent être fixées dans la zone de réception (6), **caractérisée en ce que** la plaque de base (3) et la plaque de pression (4) comportent chacune plusieurs, cependant au moins deux, points de liaison (7) destinés à relier le système de contrainte (1) à des dispositifs de fabrication ultérieure d'éléments de batterie de telle sorte que les points de liaison (7) d'une plaque respective (3, 4) soient conçus différemment en termes de forme ou de taille, le système de contrainte ainsi chargé passant par les différentes étapes de fabrication ultérieures jusqu'à ce que les feuilles de scellement soient finalement appliquées et soudées, les étapes de fabrication comprenant le soudage de talons déflecteurs, le test à haut potentiel, le cerclage, le séchage et/ou le scellement de l'élément individuel dans une feuille de scellement.

7. Utilisation d'un système de contrainte selon la revendication 6, **caractérisée en ce que** les éléments de contrainte (5) sont disposés dans les zones de bord des grands côtés respectifs des plaques (3, 4) à l'extérieur de la zone de réception (6).

8. Utilisation d'un système de contrainte selon la revendication 7, **caractérisée en ce que** les éléments de contrainte (5) sont conçus de telle sorte que l'empilement de feuilles d'électrodes (2) puisse être fixé à différentes hauteurs, des éléments de contrainte (5) étant utilisés qui comprennent un moyen de vissage avec un couple défini différent ou avec une application différente à course restreinte à deux ou plusieurs étages, ou en variante un élément de contrainte (5) étant utilisé qui prévoit un étrier de serrage, un levier à genouillère ou un levier de serrage à différentes hauteurs ou un système à baïonnette à plusieurs étages.

9. Utilisation d'un système de contrainte selon l'une des revendications précédentes 6 à 8, **caractérisée en ce que** les points de liaison (7) sont conçus sous la forme d'un alésage ajusté, notamment avec des douilles de centrage.

10. Utilisation d'un système de contrainte selon l'une des revendications précédentes, **caractérisée en ce que** la plaque de base (3) et la plaque de pression (4) comportent des évidements (9) destinés au collage de l'empilement (2).

11. Utilisation d'un système de contrainte selon l'une des revendications précédentes, **caractérisée en ce que** l'empilement (2) peut être positionné dans un dispositif de fabrication au moyen des points de liaison (7).
